# EUROPÄISCHE PATENTSCHRIFT

(11) **EP 2 394 234 B1**
(45) Veröffentlichungstag und Bekanntmachung des Hinweises auf die Patenterteilung: **13.06.2018**
(21) Anmeldenummer: 10708945.0
(22) Anmeldetag: 04.02.2010
(51) Int. Cl.: G06K 9/00

(54) **VERFAHREN UND VORRICHTUNG ZUM ERMITTELN EINER GELTENDEN FAHRSPURMARKIERUNG**
METHOD AND DEVICE FOR DETERMINING AN APPLICABLE LANE MARKER
PROCÉDÉ ET DISPOSITIF DE DÉTERMINATION D'UN MARQUAGE DE VOIE DE CIRCULATION EN VIGUEUR

(30) Priorität: 04.02.2009 DE 102009007342
(43) Veröffentlichungstag der Anmeldung: 14.12.2011
(73) Patentinhaber: HELLA GmbH & Co. KGaA, 59552 Lippstadt (DE)
(72) Erfinder: SPANGENBERG, Robert, 10249 Berlin (DE)
(74) Vertreter: Schaumburg und Partner Patentanwälte mbB
(86) Internationale Anmeldenummer: PCT/EP2010/051353
(87) Internationale Veröffentlichungsnummer: WO 2010/089345

(56) Entgegenhaltungen:
- EP-A2- 1 653 310
- EP-B1- 1 530 186
- DE-A1- 10 311 240
- DE-A1-102007 017 293
- JP-A- 2004 206 275
- VLACIC LJUBO ET AL: "Intelligent Vehicle Technologies: Theory and Applications" 1. Januar 2001 (2001-01-01), BUTTERWORTH-HEINEMANN , OXFORD, WARRENDALE, PA : SAE INTERNATIONAL, US , XP002539774 ISBN: 978-0-7680-0780-0 , Seiten 134-141 Seite 138, letzter Absatz - Seite 139, Absatz 3 Seite 140, Absatz 3

## Beschreibung

Die Erfindung betrifft ein Verfahren und eine Vorrichtung zum Ermitteln einer geltenden Fahrspurmarkierung, bei denen mindestens eine erste Fahrspurmarkierung und eine von der ersten Fahrspurmarkierung verschiedene zweite Fahrspurmarkierung detektiert werden und eine dieser detektierten Markierungen als relevante Fahrspurmarkierung ausgewählt wird.

Im Stand der Technik sind, kamerabasierte Fahrerassistenzsysteme bekannt, die zur Beobachtung und zur Analyse eines Bereichs in Fahrtrichtung vor dem Fahrzeug eine oder mehrere Mono- oder Stereokameras aufweisen. Es sind sowohl Schwarzweißkamerasysteme als auch Farbkamerasysteme zur Bilderfassung für Fahrerassistenzsysteme bekannt, die Bilder von einem Erfassungsbereich in Fahrtrichtung vor dem Fahrzeug erfassen und den Bildern entsprechende Bilddaten erzeugen. Die Bilddaten werden von mindestens einer Verarbeitungseinheit weiter verarbeitet, wobei die Bilder analysiert und insbesondere Abbildungen von Objekten in den Bildern detektiert und die Objekte klassifiziert werden. Dabei ist die Detektion und Klassifizierung üblicherweise auf das jeweilige Fahrerassistenzsystem relevanten Objekten beschränkt. Neben der Objekterkennung führt die Verarbeitungseinheit insbesondere eine Objektnachverfolgung, eine Verkehrszeichenerkennung von als Verkehrszeichen klassifizierten Objekten, eine Fahrspurerkennung und/oder eine Erkennung von vorausfahrenden und/oder entgegenkommenden Fahrzeugen durch.

Zur Fahrspurerkennung wird üblicherweise die Fahrspur detektiert, auf der sich das Fahrzeug momentan selbst bewegt. Eventuell werden auch benachbarte Fahrspuren detektiert. Dabei ist es möglich, dass beispielsweise ein Spurwechselassistent eine Information oder eine Warnung an den Fahrer ausgibt, wenn beispielsweise die momentan genutzte Fahrspur ohne eine Aktivierung des Fahrtrichtungsanzeigers verlassen wird. Zur Detektion der momentan genutzten Fahrspur werden vom jeweiligen Fahrerassistenzsystem die auf der Fahrbahn aufgebrachten Markierungen zur Kennzeichnung der Fahrspuren verwendet. Jedoch tritt insbesondere bei mehreren überlagerten Fahrspurkennzeichnungen das Problem auf, die aktuell geltende Fahrspurenmarkierung zu detektieren und diese dann für das jeweilige Fahrerassistenzsystem zu nutzen, das ausgehend von den Fahrspurmarkierungen eine Fahrerassistenzfunktion bereitstellt. Solche überlagerten Fahrspurmarkierungen treten zum Beispiel in Baustellenbereichen auf, in denen eine so genannte temporäre Baustellenspurkennzeichnung für den Zeitraum der Baumaßnahme zumindest in Bereichen der Fahrbahn zusätzlich zur ursprünglichen permanenten Fahrspurmarkierung aufgebracht werden.

In Deutschland ist beispielsweise die permanente Fahrspurmarkierung in der Farbe weiß und die temporäre Markierung in der Farbe gelb auf die Fahrbahn aufgebracht. Somit treten in einem Baustellenbereich sowie bei der Einfahrt, in einen und der Ausfahrt aus einem Baustellenbereich voneinander abweichende Fahrspurmarkierung auf, die das menschliche Auge üblicherweise über den Farbunterschied zwischen den Fahrspurmarkierungen unterscheidet. Die Farben von temporären und permanenten Spurmarkierungen variieren dabei von Land zu Land. Allein auf Farbinformationen basierende Verfahren zur Unterscheidung von temporären und permanenten Spurmarkierungen sind damit auf eine Information angewiesen, in welchem Land sich das Fahrzeug bewegt. Weiterhin ist der Einsatz der temporären Markierung zwar genormt, diese Normen werden jedoch nicht immer befolgt, so dass beispielsweise auch in Deutschland in einer Baustelle auf der linken Seite eine gelbe Markierung die relevante Markierung sein kann und auf der rechten Seite eine weiße Markierung. Somit kann selbst bei der Verwendung von Farbkameras das Problem auftreten, dass bei schlechten Lichtverhältnissen, insbesondere bei Regen, die Unterscheidung der Fahrspurmarkierungen aufgrund ihrer Farbe nicht mit ausreichender Sicherheit möglich ist. Ferner lassen sich die Farbunterschiede mit Schwarzweißkameras nur durch die Helligkeitsunterschiede der unterschiedlichen Farben im Bild detektieren. Dadurch ist eine hinreichend sichere Unterscheidung der geltenden von den nicht geltenden Markierungen nicht möglich. Der Einsatz von Schwarzweißkameras zur Erfassung von Bildern für Fahrerassistenzsysteme hat jedoch den Vorteil, dass insbesondere bei Schwarzweißkameras eingesetzte CMOS-Bilderfassungssensoren eine hohe Bildauflösung und eine hohe Graustufenauflösung von beispielsweise 4096 Graustufen ermöglichen. Eine solche Graustufen- bzw. Helligkeitsauflösung ist mit vergleichbaren Farbsensoren derzeit nicht möglich. Auch die Weiterverarbeitung der Bilddaten von Schwarzweißbildern ist erheblich geringer als die Weiterverarbeitung der Bilddaten von Farbbildern, sodass der Einsatz von Schwarzweißkameras in Fahrerassistenzsystemen vorteilhaft ist.

Aus dem Dokument EP 1 653 310 A2 ist ein Verfahren zur Spurführung eines straßengebundenen Fahrzeugs unter Verwendung einer an einer definierten Position am Fahrzeug angeordneten Kamera bekannt. Mit Hilfe der Kamera wird eine permanente Fahrspurmarkierung erfasst. Dabei werden Markierungsmuster nach Eintritt in einen Gefahrenbereich bzw. einer Baustelle detektiert und ein Steuersignal für die Querführung des Fahrzeugs ermittelt.

Aus dem Dokument DE 103 112 40 A1 sind ein Verfahren und eine Einrichtung für die Spurführung eines Fahrzeugs bekannt, bei denen zwischen temporären und permanenten Markierungen auf der Fahrbahn unterschieden wird. Beim Auffinden von temporären Markierungen werden diese vorzugsweise für die Spurführung des Fahrzeugs genutzt.
Aus dem Dokument DE 10 2004 003 848 A1 ist ein Verfahren zur Erkennung von gekennzeichneten Gefahr- und/oder Baustellen im Bereich von Fahrbahnen bekannt. Bei diesen Verfahren werden Abstandsbilder eines Erfassungsbereichs eines an einem Fahrzeug gehaltenen Sensors für elektromagnetische Strahlungen, beispielsweise ein Laserscanners, verwendet. In den Abstandsbildern wird nach Kennzeichen für eine Gefahr- und/oder Baustelle gesucht. Aus dem Dokument JP2004206275 ist ein Verfahren zum (teil-)autonomen Fahren bekannt. Sobald Fahrbahnmarkierungen in Kamerabildern nicht mehr eindeutig erkannt werden können, bspw. an einer Verzweigung mit zwei entsprechend unterschiedlichen Fahrbahnmarkierungen, wird von der Fahrkontrolle die Fahrbahnmarkierungsverfolgung eingestellt und anstelle auf die Verfolgung eines vorausfahrenden Fahrzeug umgeschaltet, sofern vorhanden. Aufgabe der Erfindung ist es, ein Verfahren und eine Vorrichtung zum Ermitteln einer geltenden Fahrspurmarkierung mit Hilfe eines Kamerasystems eines Fahrzeugs anzugeben, bei dem die Unterscheidung zwischen einer permanenten Fahrspurenmarkierung und einer temporären Fahrspurmarkierung verbessert ist.
Diese Aufgabe wird durch ein Verfahren mit den Merkmalen des Patentanspruchs 1 und durch eine Vorrichtung mit den Merkmalen des unabhängigen Vorrichtungsanspruchs gelöst. Vorteilhafte Weiterbildungen der Erfindung sind in den abhängigen Patentansprüchen angegeben.
Durch ein erfindungsgemäßes Verfahren und eine erfindungsgemäße Vorrichtung wird erreicht, dass beim Auswählen der geltenden Fahrspurmarkierungen aus zumindest zwei voneinander verschiedenen Fahrspurmarkierungen die relative Position des vorausfahrenden Fahrzeugs zu den beiden detektierten Fahrspurmarkierungen berücksichtigt wird.

Vorteilhaft ist es, den Bewegungsverlauf des vorausfahrenden Fahrzeugs relativ zu den ermittelten Fahrspurmarkierungen zu bestimmen und zu ermitteln, welche der detektierten Fahrspurmarkierungen aufgrund des Bewegungsverlaufs des Fahrzeugs die geltende Fahrspurmarkierung ist. Bei der Entscheidung, welche der detektierten Fahrspurmarkierungen die geltende Fahrspurmarkierung ist, können weitere Entscheidungskriterien berücksichtigt werden, wie die Position des eigenen Fahrzeugs relativ zur ersten Fahrspurmarkierung und relativ zur zweiten Fahrspurmarkierung, der Lenkwinkel des eigenen Fahrzeugs bzw. der Gierwinkel des eigenen Fahrzeugs relativ zum Fahrbahnverlauf und/oder die Geschwindigkeit des eigenen Fahrzeugs.
Besonders vorteilhaft ist es, ausgehend von mindestens zwei, vorzugsweise ausgehend von mindestens drei, der nacheinander als Bildfolge erfassten Bilder einen Bewegungsverlauf des vorausfahrenden Fahrzeugs zu ermitteln. Ausgehend vom ermittelten Bewegungsverlauf des vorausfahrenden Fahrzeugs und den Verläufen der mindestens zwei detektierten Fahrspurmarkierungen kann dann eine der Fahrspurmarkierungen als geltende Fahrspurmarkierung ausgewählt werden.

Ferner ist es vorteilhaft, wenn jede der Fahrspurmarkierungen eine linke Kennzeichnungslinie und eine rechte Kennzeichnungslinie umfasst und dass die Positionen des vorausfahrenden Fahrzeug jeweils zu den Kennzeichnlinien ermittelt werden. Vorzugsweise wird geprüft, ob der Bewegungsverlauf des vorausfahrenden Fahrzeugs mit mindestens einer voreingestellten Wahrscheinlichkeit mit den Verläufen der beiden Kennzeichnungslinien übereinstimmt. Der Grad der Übereinstimmung, d. h. die Wahrscheinlichkeit der Übereinstimmung kann dabei aber ein bekanntes Mustererkennungsverfahren ermitteln, d. h. über ein so genanntes Pattern-Matching-Verfahren die Kennzeichnungslinien können Strichlinien oder Volllinien sein.

Ferner ist es vorteilhaft, die Fahrspurmarkierung aus den mindestens zwei Fahrspurmarkierungen als geltende Fahrspurmarkierung auszuwählen, die für beide ermittelten Positionen einen Seitenversatz quer zur Fahrtrichtung der Fahrbahn aufweist, der für beide Positionen in einem voreingestellten Bereich liegt. Vorzugsweise werden die Positionen ausgehend von einer senkrecht unter der Fahrzeuglängsachse auf der Fahrbahn liegenden Bezugsposition ermittelt. Der Bereich kann dann beispielsweise mit 0,8 m bis 1,5 m, vorzugsweise 0,8 m bis 1,2 m voreingestellt sein. Alternativ kann die Fahrspurmarkierung als geltenden Fahrspurmarkierung ausgewählt werden, zu der die ermittelten Positionen des vorausfahrenden Fahrzeugs einen etwa gleichen seitlichen Abstand oder zumindest für eine ermittelte Position einen geringeren seitlichen Abstand aufweist.

Ferner ist es vorteilhaft, ein Überfahren zumindest einer Kennzeichnungslinie einer der detektierten Fahrspurmarkierungen zu detektieren und bei der Ermittlung der geltenden Fahrspurmarkierungen zu berücksichtigen. Das Überfahren einer Kennzeichnungslinie einer der beiden detektierten Fahrspurmarkierungen ist ein Indiz dafür, dass diese Fahrspurmarkierung nicht die relevante Fahrspurmarkierung ist.

Zur Bilderfassung wird vorzugsweise eine Schwarzweißkamera, insbesondere eine Monoschwarzweißkamera und eine Stereoschwarzweißkamera, verwendet. Die zum Einsatz in Kraftfahrzeugen geeigneten Schwarzweißkameras sind gegenüber dem für den Einsatz in Kraftfahrzeugen geeigneten Farbbildkameras im Allgemeinen kostengünstiger, haben im Allgemeinen eine höhere Auflösung und eine höhere Dynamik in der Erfassung der Helligkeitsstufen, sodass insbesondere bei geringer Beleuchtung des Erfassungsbereichs eine bessere Erfassung von Abbildungen von Objekten möglich ist als bei entsprechenden Farbbildkameras.

Besonders vorteilhaft ist es, zum Ermitteln der geltenden Fahrspurmarkierung einen ersten Grad in der Übereinstimmung zwischen dem Verlauf der ersten ermittelten Fahrspurmarkierung und dem Bewegungsverlauf des vorausfahrenden Fahrzeugs sowie einen zweiten Grad der Übereinstimmung zwischen dem Verlauf der ermittelten zweiten Fahrspurmarkierung und dem Bewegungsverlauf des vorausfahrenden Fahrzeugs zu ermitteln. Die Fahrspurmarkierung wird dann als geltende Fahrspurmarkierung ausgewählt, die einen höheren Grad an Übereinstimmung aufweist. Dabei ist es vorteilhaft, die Fahrspurmarkierung mit dem höchsten Grad an Übereinstimmung nur dann als relevante Fahrspurmarkierung auszuwählen, wenn diese einen Mindestgrad an Übereinstimmung aufweist und/oder wenn die Differenz zwischen dem ersten Grad und dem zweiten Grad eine voreingestellte Mindestdifferenz überschreitet.

Besonders vorteilhaft ist es, einem Fahrspurassistenzsystem den Verlauf der als geltend ermittelten Fahrspurmarkierung oder eine Information über die als geltend ausgewählte Fahrspurmarkierung bereit zu stellen. Das Fahrerassistenzsystem berücksichtigt dann den Verlauf der ermittelten geltenden Fahrspurmarkierung als einzuhaltende Fahrspurmarkierung. Das Fahrspurassistenzsystem kann insbesondere ein Spurwechselassistenzsystem sein.

Zusätzlich kann die Position des eigenen Fahrzeugs relativ zur ersten Fahrspurmarkierung und relativ zur zweiten Fahrspurmarkierung, vorzugsweise wiederholt, ermittelt werden. Die ermittelte Position bzw. die ermittelten Positionen werden bei der Auswahl der relevanten Fahrspurmarkierung berücksichtigt. Insbesondere können die ermittelten Positionen des vorausfahrenden Fahrzeugs und/oder des eigenen Fahrzeugs, die ermittelten Verläufe der detektierten Fahrspurmarkierungen und/oder die Lenkbewegung bzw. die Gierrate des eigenen Fahrzeugs einem Klassifikator zugeführt werden, der dann ausgehend von diesen Eingangsgrößen die relevante Fahrspurmarkierung ermittelt.

Besonders vorteilhaft ist es, die Position des eigenen Fahrzeugs relativ zur ersten Fahrspurmarkierung und relativ zur zweiten Fahrspurmarkierung mehrfach zu ermitteln, ausgehend von diesen ermittelten Positionen den Bewegungsverlauf des eigenen Fahrzeugs zu ermitteln und diesen bei der Auswahl der geltenden Fahrspurmarkierungen zu berücksichtigen, beispielsweise als Eingangsgröße für einen Klassifikator zum Ermitteln der geltenden Fahrspurmarkierung. Der Bewegungsverlauf des eigenen Fahrzeugs kann mit Hilfe des Lenkwinkels und der Geschwindigkeit des eigenen Fahrzeugs ermittelt werden.

Die Vorrichtung des unabhängigen Vorrichtungsanspruchs kann auf die gleiche Weise wie das erfindungsgemäße Verfahren weitergebildet werden, insbesondere durch die in den unabhängigen Patentansprüchen angegebenen Merkmale bzw. durch entsprechende Vorrichtungsmerkmale.

Weitere Merkmale und Vorteile der Erfindung ergeben sich aus der folgenden Beschreibung, welche in Verbindung mit den beigefügten Figuren die Erfindung anhand von Ausführungsbeispielen näher erläutert.

Es zeigen:
- Fig. 1: eine schematische Darstellung eines Fahrzeugs in einer Verkehrssituation aus Seitenansicht, wobei das Fahrzeug einer Vorrichtung zum Erfassen und Verarbeiten von Bildern hat;
- Fig. 2: die Darstellung eines ersten mit Hilfe der Vorrichtung erfassten Bildes mit einer Abbildung eines vorausfahrenden Fahrzeugs;
- Fig. 3: die Darstellung eines zweiten mit der Hilfe der Vorrichtung erfassten Bildes mit einer Abbildung des vorausfahrenden Fahrzeugs und einer permanenten Fahrspurmarkierung sowie einer temporären Fahrspurenmarkierung;
- Fig. 4: die Darstellung eines dritten mit der Hilfe der Vorrichtung erfassten Bildes mit einer Abbildung des vorausfahrenden Fahrzeugs und der permanenten Fahrspurmarkierung sowie der temporären Fahrspurenmarkierung; und
- Fig. 5: ein Blockschaltbild mit Komponenten der Vorrichtung zum Erfassen und Verarbeiten von Bildern nach Figur 1.

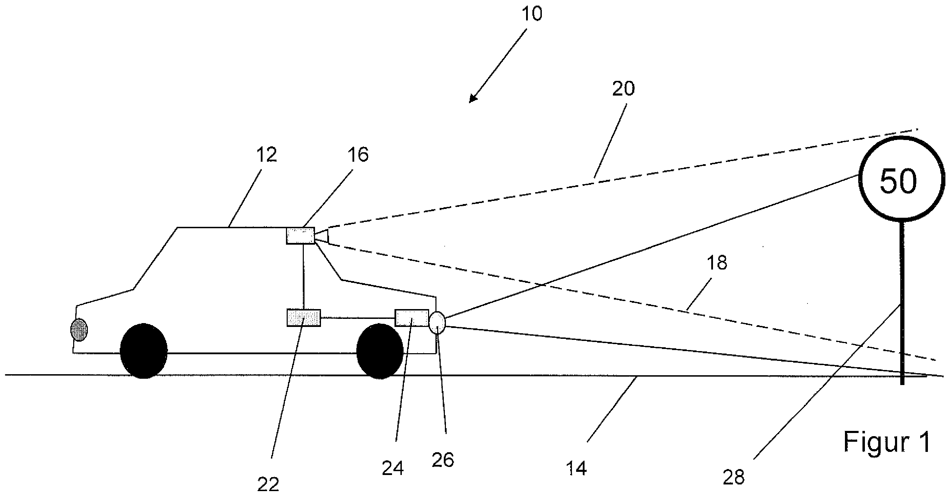

In Figur 1 ist eine Seitenansicht eines Fahrzeugs 12 in einer Verkehrssituation 10 bei der Fahrt des Fahrzeugs 12 entlang einer Fahrbahn 14 gezeigt. Das Fahrzeug 12 hat ein Kamerasystem 16 mit mindestens einer Kamera 17. Das Kamerasystem 16 ist im vorliegenden Ausführungsbeispiel ein Monokamerasystem und ist ein Schwarzweißkamerasystem zur Ermittlung von Graustufenbildern. Das Kamerasystem 16 erfasst eine Bildfolge aus Bildern mit Abbildungen eines Erfassungsbereichs vor dem Fahrzeug 12. Der horizontale Erfassungsbereich ist in Figur 1 schematisch durch die Strichlinien 18, 20 dargestellt. Ferner werden den Bildern entsprechende Bilddaten erzeugt. Die erzeugten Bilddaten werden vom Kamerasystem 16 zu einer im Fahrzeug 12 angeordneten Verarbeitungseinheit 22 übertragen und von dieser weiterverarbeitet. Insbesondere werden die Bilddaten in der Verarbeitungseinheit 22 verarbeitet, um ein Fahrassistenzsystem für den Fahrzeugführer des Fahrzeugs 12 bereitzustellen. Die Bildaufnahmefrequenz der Kamera 17 des Kamerasystems 16 liegt vorzugsweise 10 bis 50 Bilder pro Seite. Die Bilder sind durch die Kamera mit dieser Frequenz von der Verarbeitungseinheit 22 jeweils fortlaufend aufgenommen und verarbeitet.

Die durch das Kamerasystem 16 erzeugten Bilddaten eines Objektes 28 werden von der Verarbeitungseinheit 22 verarbeitet, wobei die Abbildung des Objektes 28 als Objektabbildung beziehungsweise als Objekt detektiert und vorzugsweise der Objekttyp des Objektes 28 klassifiziert wird. Auf gleiche Weise können Verkehrsschilder, Leiteinrichtungen, Straßenleuchten, auf der Fahrspur vorausfahrende Fahrzeuge und auf einer Gegenfahrbahn der Fahrbahn 14 entgegenkommende Fahrzeuge als Objekte detektiert und deren Objekttyp klassifiziert werden. Insbesondere wird die Position der Abbildungen der in einem Bild detektierten Objekte 28 ermittelt und mit der Position der Abbildungen derselben Objekte 28 in einem in der Bildfolge nachfolgenden Bild verglichen. Zur Vereinfachung wird im Folgenden die Position einer Abbildung eines Objektes in einem Bild kurz als Position des Objektes im Bild oder Bildposition des Objektes bezeichnet. Der Vergleich der Position von Objekten 28 in einem Bild und einem nach diesem Bild aufgenommenen zweiten Bild wird beispielsweise genutzt, um das Fahrverhalten zu beeinflussen und/oder um dem Fahrer des Fahrzeugs 12 gezielte Informationen zum Umfeld und zum eigenen Fahrzeug 12 geben zu können. Diese Informationen können beispielsweise auch als Eingangsdaten für Fahrerassistenzsysteme, insbesondere für ein Spurwechselassistenzsystem, dienen.

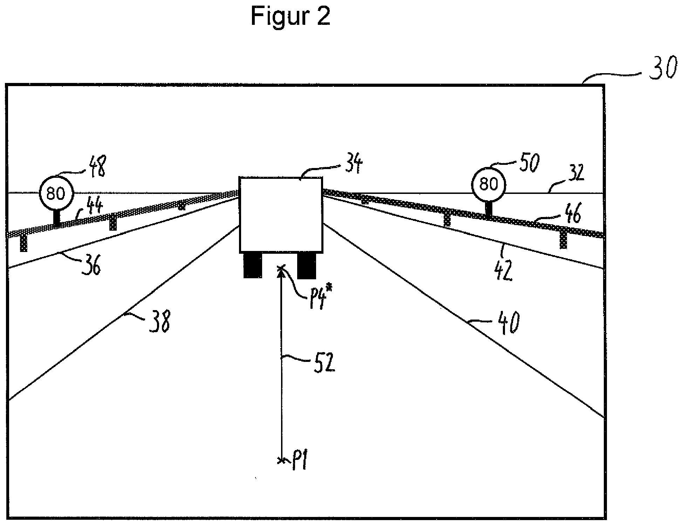

In Figur 2 ist ein erstes mit Hilfe der Kamera 17 aufgenommenes Bild 30 des Erfassungsbereichs der Kamera 17 vor dem Fahrzeug 12 gezeigt. Im Bild 30 ist der Horizont als Volllinie 32 dargestellt. Ferner umfasst das Bild eine Abbildung eines vorausfahrenden Fahrzeugs 34, Abbildungen von Fahrspurmarkierungen 36 bis 42 und Abbildungen von seitlich neben den äußeren Fahrspuren angeordneten Leitplanken 44, 46 sowie seitlich neben der Fahrbahn angeordneten Verkehrszeichen 48, 50. Die Fahrspurmarkierungen 36 bis 42 sind in Figur 2 lediglich schematisch als Volllinien dargestellt. Tatsächlich können sie auch als Strichlinie ausgeführt und zur besseren Erkennbarkeit eine etwas größere Breite aufweisen. In das Bild 30 ist ein Pfeil 52 eingefügt, der die Fahrtrichtung des eigenen und die Fahrtrichtung des vorausfahrenden Fahrzeugs angibt. Der Anfangspunkt P1 des Pfeils 52 ist die Position des vorausfahrenden Fahrzeugs 34, die in einem vorhergehenden Bild einer mit Hilfe der Kamera 17 aufgenommen Bildfolge des Erfassungsbereichs vor dem Fahrzeug 12 aufgenommenen Bild für das vorausfahrende Fahrzeug 34 ermittelt worden ist. Der Endpunkt P4 gilt für das vorausfahrende Fahrzeug 34 ausgehend vom in Figur 2 gezeigten Bild 30 ermittelte Positionen. Zwischen dem Bild, von dem ausgehend die Position P1 ermittelt worden ist und dem Bild 30, können eine Vielzahl weiterer Bilder mit Hilfe der Kamera 17 aufgenommen worden sein. Dir Bilddaten zumindest eines Teils dieser Bilder sind ebenfalls verarbeitet worden, oder die Position des vorausfahrenden Fahrzeugs 34 wiederholt bestimm worden sein kann, jedoch nicht bestimmt worden sein muss.

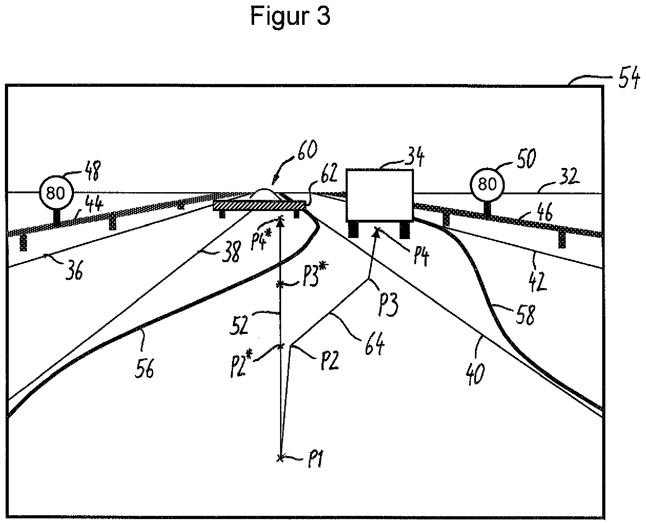

In Figur 3 ist ein weiteres mit Hilfe der Kamera 17 aufgenommenes Bild 54 dargestellt. Zusätzlich zu dem in Bild 30 nach Figur 2 dargestellten Elementen umfasst das Bild 54 Abbildungen temporärer Fahrspurmarkierungen 56, 58. Ferner sind Abbildungen einer Baustelle 60 und einer Absperrbarke 62 im Bild 54 vorhanden. Die mit Hilfe der temporären Fahrspurmarkierungen 56, 58 festgelegte Fahrspur weicht vom Verlauf der durch die Fahrspurmarkierungen 38, 40 begrenzten Fahrspur ab, sodass der Verkehr von dieser Fahrspur auf die durch die Markierungen 40, 42 begrenzte Fahrspur übergeleitet wird. Zur vereinfachten Darstellung unterscheiden sich die Bilder 30 und 54 nur durch die im Bild 54 zusätzlich vorhandenen Fahrspurmarkierungen 56, 58, die Baustelle 60, 62 und die Position des vorausfahrenden Fahrzeugs 34. Zur Vereinfachung der nachfolgenden Erläuterungen ist der Pfeil 52 ebenfalls in das Bild 54 nach Figur 3 eingezeichnet worden. Zusätzlich ist ein Pfeil 64 eingezeichnet, der mehrere Positionen P1 bis P4 des vorausfahrenden Fahrzeugs 34 angibt und somit den Bewegungsverlauf des Fahrzeugs 34 zeigt. In einem ersten vor dem Bild 54 aufgenommenen Bild ist die Position P1 des vorausfahrenden Fahrzeugs 34 ermittelt worden. In einem nach dem ersten Bild aufgenommenen Bild, das jedoch vor dem Bild 54 aufgenommen worden ist, ist die Position P2 des vorausfahrenden Fahrzeugs 34 ermittelt worden. In einem dritten aufgenommenen Bild das vor dem Bild 54 aufgenommen worden ist, ist die Position P3 des vorausfahrenden Fahrzeugs 34 ermittelt worden. Im Bild 54 ist die Position P4 des vorausfahrenden Fahrzeugs 34 ermittelt worden. Durch Verbinden dieser ermittelten Positionen ergibt sich der Pfeil 64, der somit den Bewegungsverlauf des vorausfahrenden Fahrzeugs 34 zwischen der Position P1 und der Position P4 angibt. Zwischen der Aufnahme des ersten und des zweiten Bildes, zwischen den Aufnahmen des zweiten und dritten Bildes und zwischen den Aufnahmen des dritten Bildes und des Bildes 54 können eine Vielzahl weiterer Bilder aufgenommen und ausgewertet worden sein. Der ermittelte, durch den Pfeil 64 dargestellte Bewegungsverlauf des vorausfahrenden Fahrzeugs 34 verläuft damit im Wesentlichen parallel zu den temporären Fahrspurmarkierungen 56, 58 und weicht stark vom Verlauf der Fahrspurmarkierungen 38, 40 ab. Der durch den Pfeil 64 angegebene Bewegungsverlauf des Fahrzeugs 34 schneidet zwischen der Position P3 und P4 die ursprüngliche Fahrspurmarkierung 40. Durch die größere Übereinstimmung des ermittelten Bewegungsverlaufs des vorausfahrenden Fahrzeugs 34 mit den temporären Fahrspurmarkierungen 56, 58 gegenüber dem permanenten Fahrspurmarkierungen 38, 40 werden die Fahrspurmarkierungen 56, 58 als geltende Fahrspurmarkierungen 56, 58 ermittelt und für ein Fahrerassistenzsystem als relevante bzw. geltende Fahrspurmarkierung 56, 58 bereitgestellt. Wenn als Positionen für das vorausfahrende Fahrzeug jedoch die Positionen P1, P2*, P3* und P4* in mehreren nacheinander aufgenommenen Bildern ermittelt worden wären, wird durch diese Positionen P1, P2*, P3*, P4* einer zu den Fahrspurmarkierungen 38, 40 paralleler Bewegungsverlauf des vorausfahrenden Fahrzeugs 34 ermittelt. Dieser Bewegungsverlauf schneidet dann die Fahrspurmarkierung 56. Der durch den Pfeil 52 gekennzeichneten Bewegungsverlauf 52 würde somit mit dem Verlauf der Fahrspurmarkierungen 38, 40 übereinstimmen, sodass diese Fahrspurmarkierungen 38, 40 dann als geltende Fahrspurmarkierungen herangezogen werden könnten.

Es können jedoch auch weitere Faktoren bei der Ermittlung der geltenden Fahrspurmarkierung bzw. bei der Verifizierung einer ermittelten geltenden Fahrspurmarkierung genutzt werden. Insbesondere können quer zur Fahrbahn angeordnete Wandbarken 62 zum Ermitteln oder zum Verifizieren einer ermittelten geltenden Fahrspurmarkierung genutzt werden. Auch können die Position des eigenen Fahrzeugs 12, ein Lenkwinkel des Fahrzeugs 12 oder ein Gierwinkel des Fahrzeugs 12 sowie die Geschwindigkeit des Fahrzeugs 12 beim Ermitteln oder Verifizieren der geltenden Fahrspurmarkierung berücksichtigt werden.

Allgemein wird das Verhalten eines vorhandenen vorausfahrenden Fahrzeugs 34 beobachtet und bei der Auswahl der geltenden Fahrspurmarkierung berücksichtigt. Zusätzlich oder alternativ kann das Fahrverhalten des eigenen Fahrzeugs 12 beim Ermitteln einer geltenden Fahrspurmarkierung berücksichtigt werden.

Es kann davon ausgegangen werden, dass ein Fahrzeug 12, 34 etwa in der Mitte einer geltenden Fahrspur fährt, dies betrifft sowohl das vorausfahrende Fahrzeug 34 als auch das eigene Fahrzeug 12. Mit Hilfe der beschriebenen Vorgehensweise kann auf einfache Art und Weise die geltende Fahrspurmarkierung bei einander überlagerten Fahrspurmarkierungen ermittelt werden. Solche überlagerten Fahrspurmarkierungen treten insbesondere bei zusätzlichen auf die Fahrbahn 14 aufgebrachten temporären Fahrspurmarkierungen 56, 58 zu bereits vorhandenen Fahrspurmarkierungen 36 bis 42 auf. Dies kann insbesondere dann erforderlich sein, wenn Baustellen 60 die Sperrung mindestens einer Fahrspur erfordern. Wird durch Analyse des Bewegungsverlaufs 54 ermittelt, dass das vorausfahrende Fahrzeug 34 vor Einfahrt in einen Baustellenbereich 60 relativ abrupt die Richtung wechselt, wie dies in Figur 3 gezeigt ist, so kann das Fahrassistenzsystem durch einen Vergleich der Positionsänderung des vorausfahrenden Fahrzeugs 34 in mehreren nacheinander aufgenommenen Bildern anhand des abrupten Wechsels der Fahrtrichtung des vorausfahrenden Fahrzeugs 34 auf eine Verlegung der Fahrspur mit dem Begrenzungslinien 56, 58 schließen. Die durch die Begrenzungslinien 56, 58 begrenzte Fahrspur wird auch als Baustellenfahrspur bezeichnet.

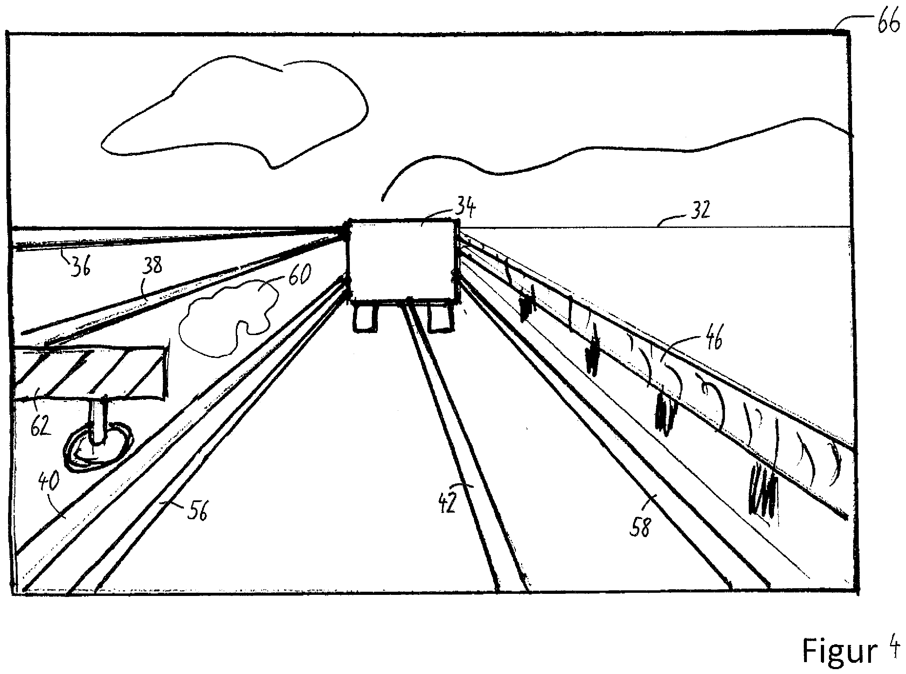

In Figur 4 ist ein weiteres mit Hilfe der Kamera 17 aufgenommenes Bild 66 gezeigt, bei dem sich das vorausfahrende Fahrzeug 34 vor dem Fahrzeug 12 befindet. Durch den seitlichen Abstand zwischen dem vorausfahrenden Fahrzeug 34 und den temporären Fahrspurmarkierungen 56, 58 werden diese weiterhin als relevante Fahrspurmarkierungen bzw. als geltende Fahrspurmarkierungen detektiert. Die permanente Fahrspurmarkierung 40 wird weiterhin als nicht geltende Fahrspurmarkierung detektiert.

Allgemein wird bei der Erfindung eine Information zur Interpretation und zur Erfindung der eigenen Fahrspur mit Hilfe eines detektierten vorausfahrenden Fahrzeugs 34 ermittelt, von der ausgehend eine geltende Fahrspurmarkierung bzw. geltende Fahrspur aus mehreren von einander verschiedenen Fahrspurmarkierungen bzw. Fahrspuren erfolgt. Besonders vorteilhaft ist es, die Eigenbewegung des Fahrzeugs 12 bei der Ermittlung der geltenden Fahrspur zu berücksichtigen.

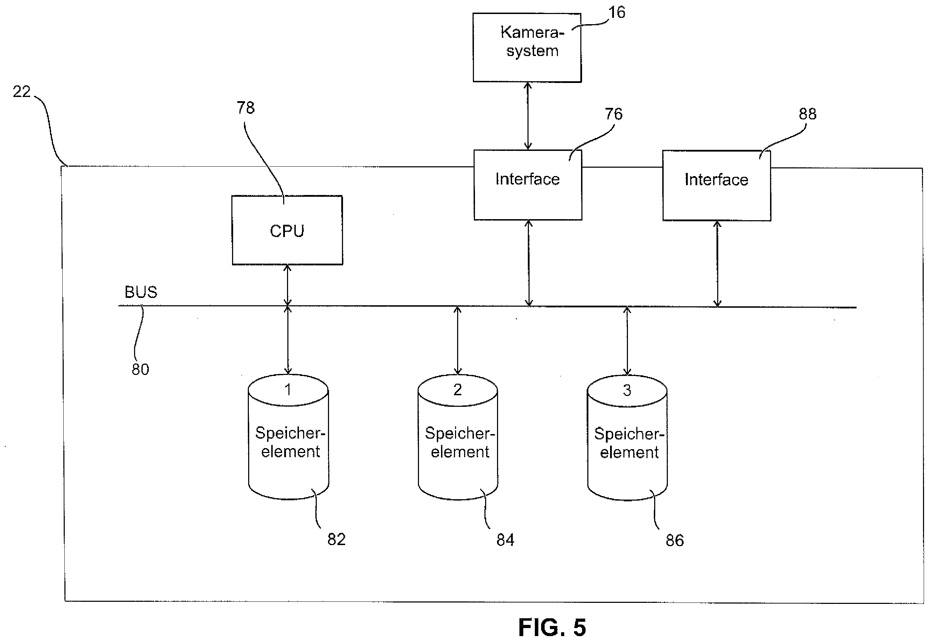

In Figur 5 ist ein Blockschaltbild mit der Verarbeitungseinheit 22 und dem Kamerasystem 16 gezeigt, mit deren Hilfe eine geltende Fahrspurmarkierung ausgewählt bzw. die ursprüngliche Auswahl dieser Fahrspurmarkierungen 56, 58 als geltende Fahrspurmarkierungen 56, 58 bestätigt wird. Die Verarbeitungseinheit 22 umfasst eine Central Processing Unit (CPU) 78, einen Datenbus 80 und drei Speicherelemente 82 bis 86.

Die Verarbeitungseinheit 22 ist über ein erstes Interface 76 mit dem Kamerasystem 16 verbunden. Ferner umfasst die Verarbeitungseinheit 22 ein zweites Interface 88, über das die mit Hilfe der Verarbeitungseinheit 22 verarbeiteten Daten an andere Elemente, beispielsweise das Lichtsteuermodul 24, ausgegeben werden können. Vorzugsweise bildet das zweite Interface 88 eine Verbindung zu einem Fahrzeugbussystem.

Die CPU 78, das erste Interface 76, das zweite Interface 88 und die Speicherelemente 82, 84, 86 sind über den Datenbus 80 miteinander verbunden. Die den mit Hilfe des Kamerasystems 16 erzeugten den Bildern 44a bis 44c, 52 entsprechenden Bilddaten werden über das erste Interface 76 von dem Kamerasystem 16 an die Verarbeitungseinheit 22 als Eingangsdaten übermittelt. Die Bilddaten werden im ersten Speicherelement 82 gespeichert. Im zweiten Speicherelement 84 der Verarbeitungseinheit 22 sind mindestens Programmdaten mindestens eines Bildverarbeitungsprogramms zum Ermitteln der Bildpositionen P1 bis P4, P1 bis P4* gespeichert. Ebenso sind im zweiten Speicherelement 84 Programmdaten einer Routine zur Ermittlung einer geltenden Fahrspur und/oder von geltenden Fahrspurmarkierungen 56, 58 ausgehend von den ermittelten Bildpositionen P1 bis P4 und dem Verlauf detektierter Fahrspurmarkierungen 36 bis 42, 56, 58 gespeichert.

Die ermittelte Änderung der Position des vorausfahrenden Fahrzeugs 34 zwischen nacheinander mit Hilfe der Kamera 17 aufgenommenen Bildern wird dann als Eingangsgröße für ein Spurwechselassistenzsystem genutzt und/oder über das zweite Interface 88 ausgegeben. Ein solches Spurwechselassistenzsystem wird auch als Lane departure warning system bezeichnet.

Die Erfindung ist in Verbindung mit einer Monokamera zur Aufnahme von Graustufenbildern beschrieben worden. Jedoch ist die Erfindung in gleicher Weise bei einem Stereokamerasystem und/oder Farbkameras einsetzbar.

## Patentansprüche

1. Computerimplementiertes Verfahren zum Ermitteln einer geltenden Fahrspurmarkierung mit Hilfe eines Kamerasystems eines Fahrzeugs, insbesondere eines Straßenfahrzeugs, bei dem mit Hilfe einer Kamera (17) des Kamerasystems (16) mehrere Bilder (30, 54, 66) mit Abbildungen eines Bereichs vor dem Fahrzeug (12) nacheinander als Bildfolge erfasst, und dem jeweiligen Bild (30, 54, 66) entsprechende Bilddaten erzeugt werden, und bei dem die Bilddaten zumindest eines Teils der Bilder (30, 54, 66) der Bildfolge verarbeitet werden,
wobei mindestens eine erste Fahrspurmarkierung (38, 40) zur Begrenzung einer ersten Fahrspur und eine von der ersten Fahrspurmarkierung verschiedene zweite Fahrspurmarkierung (56, 58) zur Festlegung einer von der ersten Fahrspur abweichend verlaufenden Fahrspur in mindestens einem Bild der Bildfolge detektiert werden, ein vor dem Fahrzeug (12) vorausfahrendes Fahrzeug (34) in mindestens zwei nacheinander aufgenommenen Bildern (30, 54, 66) der Bildfolge detektiert wird,
**dadurch gekennzeichnet, dass** für jedes der mindestens zwei Bilder die Position (P1 bis P4; P1 bis P4*) des vorausfahrenden Fahrzeugs (34) relativ zur ersten Fahrspurmarkierung (38, 40) und die Position (P1 bis P4; P1 bis P4*) des vorausfahrenden Fahrzeugs (34) relativ zur zweiten Fahrspurmarkierung (56, 58) ermittelt wird,
und wobei abhängig von den mit Hilfe der Bilder ermittelten Positionen (P1 bis P4; P1 bis P4*) des vorausfahrenden Fahrzeugs (34) eine der detektierten Fahrspurmarkierungen (38, 40; 56, 58) als geltende Fahrspurmarkierung ausgewählt wird.

2. Verfahren nach Anspruch 1, **dadurch gekennzeichnet, dass** ausgehend von mindestens zwei, vorzugsweise mindestens drei, der nacheinander als Bildfolge erfassten Bilder ein Bewegungsverlauf (52, 64) des vorausfahrenden Fahrzeugs (34) ermittelt wird, und dass ausgehend vom ermittelten Bewegungsverlauf (52, 64) des vorausfahrenden Fahrzeugs (34) und den Verläufen der mindestens zwei detektierten Fahrspurmarkierungen (38, 40; 56, 58) eine der Fahrspurmarkierungen (38, 40; 56, 58) als geltende Fahrspurmarkierung ausgewählt wird.

3. Verfahren nach einem der vorhergehenden Ansprüche, **dadurch gekennzeichnet, dass** die Fahrspurmarkierung (38, 40; 56, 58) aus den mindestens zwei Fahrspurmarkierungen (38, 40; 56, 58) als geltende Fahrspurmarkierung (38, 40) ausgewählt wird, die für beide ermittelten Positionen einen Seitenversatz quer zur Fahrtrichtung der Fahrbahn (14) aufweist, der für beide Positionen (P1 bis P4; P1 bis P4*) in einem voreingestellten Bereich liegt, oder zu der die ermittelten Positionen (P1 bis P4; P1 bis P4*) geringere seitliche Abstände aufweisen.

4. Verfahren nach einem der vorhergehenden Ansprüche, **dadurch gekennzeichnet, dass** ein Überfahren zumindest einer der detektierten Fahrspurmarkierungen (38, 40; 56, 58) detektiert und bei der Ermittlung der geltenden Fahrspurmarkierung (38, 40; 56, 58) berücksichtigt wird.

5. Verfahren nach einem der vorhergehenden Ansprüche, **dadurch gekennzeichnet, dass** ein erster Grad in der Übereinstimmung zwischen dem Verlauf der ersten ermittelten Fahrspurmarkierung (38, 40) und dem Bewegungsverlauf (52, 64) des vorausfahrenden Fahrzeugs (34) und ein zweiter Grad der Übereinstimmung zwischen dem Verlauf der zweiten ermittelten Fahrspurmarkierung (56, 58) und dem Bewegungsverlauf (52, 64) des vorausfahrenden Fahrzeugs (34) ermittelt wird, und dass die Fahrspurmarkierung (38, 40; 56, 58) als geltende Fahrspurmarkierung ausgewählt wird, die einen höheren Grad an Übereinstimmung aufweist.

6. Verfahren nach Anspruch 5, **dadurch gekennzeichnet, dass** die Fahrspurmarkierung (38, 40; 56, 58) mit dem höchsten Grad an Übereinstimmung nur dann als geltende Fahrspurmarkierung (38, 40; 56, 58) ausgewählt wird, wenn der Grad der Übereinstimmung einen Mindestgrad an Übereinstimmung aufweist und/oder wenn die Differenz zwischen dem ersten Grad und dem zweiten Grad eine voreingestellte Mindestdifferenz überschreitet.

7. Verfahren nach einem der vorhergehenden Ansprüche, **dadurch gekennzeichnet, dass** einem Fahrspurassistenzsystem der Verlauf der als geltend ermittelten Fahrspurmarkierung (38, 40; 56, 58) oder eine Information über die als geltend ausgewählte Fahrspurmarkierung (38, 40; 56, 58) bereitgestellt wird, und dass das Fahrerassistenzsystem (38, 40; 56, 58) den Verlauf der geltenden Fahrspurmarkierung (38, 40; 56, 58) als einzuhaltende Fahrspurmarkierung (38, 40; 56, 58) weiterverarbeitet.

8. Verfahren nach einem der vorhergehenden Ansprüche, **dadurch gekennzeichnet, dass** zusätzlich die Position des eigenen Fahrzeugs (12) relativ zur ersten Fahrspurmarkierung (38, 40) und relativ zur zweiten Fahrspurmarkierung (56, 58), vorzugsweise wiederholt, ermittelt wird, und dass die ermittelte Position bei der Auswahl der geltenden Fahrspurmarkierung (38, 40; 56, 58) berücksichtigt wird.

9. Verfahren nach Anspruch 8, **dadurch gekennzeichnet, dass** die Position des eigenen Fahrzeugs (12) relativ zur ersten Fahrspurmarkierung (38, 40) und relativ zur zweiten Fahrspurmarkierung (56, 58) mehrfach ermittelt und der Bewegungsverlauf des eigenen Fahrzeugs (12) bei der Auswahl der geltenden Fahrspurmarkierung (38, 40; 56, 58) berücksichtigt wird.

10. Verfahren nach Anspruch 9, **dadurch gekennzeichnet, dass** der Bewegungsverlauf (52, 64) des eigenen Fahrzeugs (12) mit Hilfe des Lenkwinkels und der Geschwindigkeit des eigenen Fahrzeugs (12) ermittelt wird.

11. Vorrichtung zum Ermitteln einer geltenden Fahrspurmarkierung mit Hilfe eines Kamerasystems (16) eines Fahrzeugs (12), insbesondere eines Straßenfahrzeugs,
mit einem Kamerasystem (16) mit einer Kamera (17) zum Erfassen von mehreren Bildern (30, 54, 66) mit Abbildungen eines Bereichs vor dem Fahrzeug (12) nacheinander als Bildfolge und Erzeugen von dem jeweiligen Bild (30, 54, 66) entsprechenden Bilddaten, mit einer Verarbeitungseinheit (22) zum Verarbeiten der Bilddaten zumindest eines Teils der Bilder (30, 54, 66) der Bildfolge, wobei die Verarbeitungseinheit (22) in mindestens einem Bild (30, 54, 66) der Bildfolge mindestens eine erste Fahrspurmarkierung (38, 40) zur Begrenzung einer ersten Fahrspur und eine von der ersten Fahrspurmarkierung verschiedene zweite Fahrspurmarkierung (56, 58) zur Festlegung einer von der ersten Fahrspur abweichend verlaufenden Fahrspur detektiert, die Verarbeitungseinheit (22) ein vor dem Fahrzeug (12) vorausfahrendes Fahrzeug (34) in mindestens zwei Bildern (30, 54, 66) der Bildfolge detektiert,
**dadurch gekennzeichnet, dass**
die Verarbeitungseinheint (22) jeweils die Position (P1 bis P4; P1 bis P4*) des vorausfahrenden Fahrzeugs (34) relativ zur detektierten ersten Fahrspurmarkierung (38, 48; 56, 58) und die Position des Fahrzeugs relativ zur zweiten Fahrspurmarkierung für jedes der mindestens zwei Bilder ermittelt, und
wobei die Verarbeitungseinheit (22) abhängig von dem ermittelten Positionen (P1 bis P4; P1 bis P4*) des vorausfahrenden Fahrzeugs (34) relativ zu den in beiden Fahrspurmarkierungen (38, 40; 56, 58) eine dieser detektierten Fahrspurmarkierungen (38, 40; 56, 58) als geltende Fahrspurmarkierungen (56, 58) auswählt.

## Claims

1. A computer-implemented method for determining a valid lane marking with the aid of a camera system of a vehicle, in particular a road vehicle,
in which with the aid of a camera (17) of the camera system (16) several pictures (30, 54, 66) with images of an area in front of the vehicle (12) are successively taken as a picture series, and image data corresponding to the respective picture (30, 54, 66) are generated,
and in which the image data of at least a part of the pictures (30, 54, 66) of the picture series are processed,
wherein at least a first lane marking (38, 40) for delimiting a first lane and a second lane marking (56, 58) different from the first lane marking for defining a lane running differently from the first lane are detected in at least one picture of the picture series,
a vehicle (34) driving ahead of the vehicle (12) is detected in at least two successively taken pictures (30, 54, 66) of the picture series,
**characterized in that** for each of the at least two pictures, the position (P1 to P4; P1 to P4*) of the vehicle driving ahead (34) relative to the first lane marking (38, 40) and the position (P1 to P4; P1 to P4*) of the vehicle driving ahead (34) relative to the second lane marking (56, 58) is determined,
and wherein, dependent on the positions (P1 to P4; P1 to P4*) of the vehicle driving ahead (34) determined with the aid of the pictures, one of the detected lane markings (38, 40; 56, 58) is selected as the valid lane marking.

2. The method according to claim 1, **characterized in that** based on at least two, preferably at least three of the pictures successively taken as a picture series, a course of movement (52, 64) of the vehicle driving ahead (34) is determined, and **in that** based on the determined course of movement (52, 64) of the vehicle driving ahead (34) and the courses of the at least two detected lane markings (38, 40; 56, 58) one of the lane markings (38, 40; 56, 58) is selected as the valid lane marking.

3. The method according to one of the preceding claims, **characterized in that** from the at least two lane markings (38, 40; 56, 58) the lane marking (38, 40; 56, 58) is selected as the valid lane marking (38, 40) that, for both determined positions, has a lateral offset transverse to the traffic direction of the lane (14) that is within a preset range for both positions (P1 to P4; P1 to P4*), or to which the determined positions (P1 to P4; P1 to P4*) have smaller lateral distances.

4. The method according to one of the preceding claims, **characterized in that** a crossing of at least one of the detected lane markings (38, 40; 56, 58) is detected and is taken into account in the determination of the valid lane marking (38, 40; 56, 58).

5. The method according to one of the preceding claims, **characterized in that** a first degree of correspondence between the course of the first determined lane marking (38, 40) and the course of movement (52, 64) of the vehicle driving ahead (34) and a second degree of correspondence between the course of the second determined lane marking (56, 58) and the course of movement (52, 64) of the vehicle driving ahead (34) is determined, and **in that** the lane marking (38, 40; 56, 58) that has a higher degree of correspondence is selected as the valid lane marking.

6. The method according to claim 5, **characterized in that** the lane marking (38, 40; 56, 58) with the highest degree of correspondence is selected as the valid lane marking (38, 40; 56, 58) only when the degree of correspondence has a minimum degree of correspondence and/or when the difference between the first degree and the second degree exceeds a preset minimum difference.

7. The method according to one of the preceding claims, **characterized in that** a lane departure warning system is provided with the course of the lane marking (38, 40; 56, 58) determined as the valid lane marking or with an information on the lane marking (38, 40; 56, 58) selected as the valid lane marking, and **in that** the driver assistance system (38, 40; 56, 58) processes the course of the valid lane marking (38, 40; 56, 58) as the lane marking (38, 40; 56, 58) to be followed.

8. The method according to one of the preceding claims, **characterized in that** in addition the position of the own vehicle (12) relative to the first lane marking (38, 40) and relative to the second lane marking (56, 58) is determined, preferably repeatedly, and **in that** the determined position is taken into account in the selection of the valid lane marking (38, 40; 56, 58).

9. The method according to claim 8, **characterized in that** the position of the own vehicle (12) relative to the first lane marking (38, 40) and relative to the second lane marking (56, 58) is determined several times, and the course of movement of the own vehicle (12) is taken into account in the selection of the valid lane marking (38, 40; 56, 58).

10. The method according to claim 9, **characterized in that** the course of movement (52, 64) of the own vehicle (12) is determined with the aid of the steering angle and the speed of the own vehicle (12).

11. A device for determining a valid lane marking with the aid of a camera system (16) of a vehicle (12), in particular a road vehicle,
with a camera system (16) having a camera (17) for successively taking several pictures (30, 54, 66) with images of an area in front of the vehicle (12) as a picture series and generating image data corresponding to the respective picture (30, 54, 66),
with a processing unit (22) for processing the image data of at least a part of the pictures (30, 54, 66) of the picture series, wherein the processing unit (22) detects in at least one picture (30, 54, 66) of the picture series at least a first lane marking (38, 40) for delimiting a first lane and a second lane marking (56, 58) different from the first lane marking for defining a lane running differently from the first lane,
the processing unit (22) detects a vehicle (34) driving ahead of the vehicle (12) in at least two pictures (30, 54, 66) of the picture series,
**characterized in that**
the processing unit (22) each time determines the position (P1 to P4; P1 to P4*) of the vehicle driving ahead (34) relative to the detected first lane marking (38, 48; 56, 58) and the position of the vehicle relative to the second lane marking for each of the at least two pictures, and
wherein the processing unit (22), dependent on the determined positions (P1 to P4; P1 to P4*) of the vehicle driving ahead (34) relative to both lane markings (38, 40; 56, 58), selects one of these detected lane markings (38, 40; 56, 58) as the valid lane markings (56, 58).

## Revendications

1. Procédé mis en oeuvre par ordinateur de détermination d'un marquage de voie de circulation en vigueur à l'aide d'un système de caméra d'un véhicule, en particulier d'un véhicule routier,
selon lequel, à l'aide d'une caméra (17) du système de caméra (16), plusieurs images (30, 54, 66) reproduisant une zone située devant le véhicule (12) sont enregistrées successivement en tant que suite d'images, et des données d'image correspondant à l'image (30, 54, 6) respective sont produites,
et selon lequel les données d'image d'au moins une partie des images (30, 54, 66) de la suite d'images sont traitées,
au moins un premier marquage de voie de circulation (38, 40) destiné à délimiter une première voie de circulation et un deuxième marquage de voie de circulation (56, 58) différent du premier marquage de voie de circulation et destiné à établir une voie de circulation s'étendant différemment de la première voie de circulation étant détectés dans au moins une image de la suite d'images,
un véhicule (34) précédant le véhicule (12) étant détecté dans au moins deux images (30, 54, 66) de la suite d'images enregistrées successivement,
**caractérisé en ce que**
pour chacune des deux images ou plus, la position (P1 à P4 ; P1 à P4*) du véhicule (34) précédent par rapport au premier marquage de voie de circulation (38, 40) est déterminée et la position (P1 à P4 ; P1 à P4*) du véhicule (34) précédent par rapport au deuxième marquage de voie de circulation (56, 58) est déterminée,
et un des marquages de voie de circulation (38, 40 ; 56, 58) détectés étant sélectionné comme marquage de voie de circulation en vigueur en fonction des positions (P1 à P4 ; P1 à P4*) , déterminées à l'aide des images, du véhicule (34) précédent.

2. Procédé selon la revendication 1, **caractérisé en ce qu'**à partir d'au moins deux, de préférence au moins trois images enregistrées successivement en tant que suite d'images, une trajectoire de mouvement (52, 64) du véhicule (34) précédent est déterminée, et **en ce qu'**à partir de la trajectoire de mouvement (52, 64) déterminée du véhicule (34) précédent et des tracés des deux marquages de voie de circulation (38, 40 ; 56, 58) détectés ou plus, l'un des marquages de voie de circulation (38, 40 ; 58, 58) est sélectionné comme marquage de voie de circulation en vigueur.

3. Procédé selon l'une quelconque des revendications précédentes, **caractérisé en ce que** le marquage de voie de circulation (38, 40 ; 56, 58) qui présente pour les deux positions déterminées un décalage latéral transversalement au sens de marche de la chaussée (14) qui se situe pour les deux positions (P1 à P4 ; P1 à P4*) dans une zone pré-établie, ou par rapport auquel les positions (P1 à P4 ; P1 à P4*) déterminées présentent des écarts latéraux réduits, est sélectionné à partir des deux marquages de voie de circulation (38, 40 ; 56, 58) ou plus comme marquage de voie de circulation (38, 40) en vigueur.

4. Procédé selon l'une quelconque des revendications précédentes, **caractérisé en ce qu'**un franchissement d'au moins un des marquages de voie de circulation (38, 40 ; 56, 58) détectés est détecté et pris en compte lors de la détermination du marquage de voie de circulation (38, 40 ; 56, 58) en vigueur.

5. Procédé selon l'une quelconque des revendications précédentes, **caractérisé en ce qu'**un premier degré de concordance entre le tracé du premier marquage de voie de circulation (38, 40) déterminé et la trajectoire de mouvement (52, 64) du véhicule (34) précédent et un deuxième degré de concordance entre le tracé du deuxième marquage de voie de circulation (56, 58) déterminé et la trajectoire de mouvement (52, 64) du véhicule (34) précédent sont déterminés, et **en ce que** le marquage de voie de circulation (38, 40 ; 56, 58) qui présente un degré de concordance plus élevé est sélectionné comme marquage de voie de circulation en vigueur.

6. Procédé selon la revendication 5, **caractérisé en ce que** le marquage de voie de circulation (38, 40 ; 56, 58) présentant le degré de concordance le plus élevé n'est sélectionné comme marquage de voie de circulation (38, 40 ; 56, 58) en vigueur que lorsque le degré de concordance présente un degré minimum de concordance et/ou lorsque la différence entre le premier degré et le deuxième degré dépasse une différence minimale pré-établie.

7. Procédé selon l'une quelconque des revendications précédentes, **caractérisé en ce que** le tracé du marquage de voie de circulation (38, 40 ; 56, 58) déterminé comme en vigueur ou une information concernant le marquage de voie de circulation (38, 40 ; 56, 58) sélectionné comme en vigueur est fourni(e) à un système d'assistance au changement de voie de circulation, et **en ce que** le système d'aide à la conduite (38, 40 ; 56, 58) retraite le tracé du marquage de voie de circulation (38, 40 ; 56, 58) en vigueur comme marquage de voie de circulation (38, 40 ; 56, 58) à respecter.

8. Procédé selon l'une quelconque des revendications précédentes, **caractérisé en ce que** la position dudit véhicule (12) par rapport au premier marquage de voie de circulation (38, 40) et par rapport au deuxième marquage de voie de circulation (56, 58) est déterminée en plus, de préférence à plusieurs reprises, et **en ce que** la position déterminée est prise en compte lors de la sélection du marquage de voie de circulation (38, 40 ; 56, 58) en vigueur.

9. Procédé selon la revendication 8, **caractérisé en ce que** la position dudit véhicule (12) par rapport au premier marquage de voie de circulation (38, 40) et par rapport au deuxième marquage de voie de circulation (56, 58) est déterminée à plusieurs reprises et la trajectoire de mouvement dudit véhicule (12) est prise en compte lors de la sélection du marquage de voie de circulation (38, 40 ; 56, 58) en vigueur.

10. Procédé selon la revendication 9, **caractérisé en ce que** la trajectoire de mouvement (52, 64) dudit véhicule (12) est déterminée à l'aide de l'angle de braquage et de la vitesse du véhicule (12) propre.

11. Dispositif de détermination d'un marquage de voie de circulation en vigueur à l'aide d'un système de caméra (16) d'un véhicule (12), en particulier d'un véhicule routier,
comprenant un système de caméra (16) comportant une caméra (17) destinée à enregistrer successivement en tant que suite d'images plusieurs images (30, 54, 66) reproduisant une zone située devant le véhicule (12), et à produire des données d'image correspondant à l'image (30, 54, 66) respective,
comprenant une unité de traitement (22) pour le traitement des données d'image d'au moins une partie des images (30, 54, 66) de la suite d'images, l'unité de traitement (22) traitant dans au moins une image (30, 54, 66) de la suite d'images au moins un premier marquage de voie de circulation (38, 40) destiné à délimiter une première voie de circulation et un deuxième marquage de voie de circulation (52, 58) différent du premier marquage de voie de circulation et destiné à établir une voie de circulation s'étendant différemment de la première voie de circulation,
l'unité de traitement (22) détectant un véhicule (34) précédant le véhicule (12) dans au moins deux images (30, 54, 66) de la suite d'images,
**caractérisé en ce que**
l'unité de traitement (22) détermine respectivement la position (P1 à P4 ; P1 à P4*) du véhicule (34) précédent par rapport au premier marquage de voie de circulation (38, 48 ; 56, 58) détecté et la position du véhicule par rapport au deuxième marquage de voie de circulation pour chacune des deux images ou plus, et
l'unité de traitement (22) sélectionnant un de ces marquages de voie de circulation (38, 40 ; 56, 58) détectés comme marquage de voie de circulation (56, 58) en vigueur en fonction des positions (P1 à P4 ; P1 à P4*) déterminées du véhicule (34) précédent par rapport aux deux marquages de voie de circulation (38, 40 ; 56, 58) .
